## Europäisches Patentamt
## European Patent Office
## Office européen des brevets

(19)

(11) Veröffentlichungsnummer : **0 118 667**
**B1**

(12)

# EUROPÄISCHE PATENTSCHRIFT

(45) Veröffentlichungstag der Patentschrift :
03.12.86

(51) Int. Cl.⁴ : **G 09 F 3/00, C 06 B 23/00**

(21) Anmeldenummer : **84100349.4**

(22) Anmeldetag : **14.01.84**

(54) **Markierungsmittel, Verfahren zu ihrer Herstellung und ihre Verwendung zur Markierung von feindispersen Systemen.**

(30) Priorität : **18.01.83 DE 3301357**

(43) Veröffentlichungstag der Anmeldung :
**19.09.84 Patentblatt 84/38**

(45) Bekanntmachung des Hinweises auf die Patenterteilung : **03.12.86 Patentblatt 86/49**

(84) Benannte Vertragsstaaten :
**AT BE CH DE FR GB IT LI LU NL SE**

(56) Entgegenhaltungen :
**EP-A- 0 085 414**
**US-A- 3 897 284**
**US-A- 4 131 064**

(73) Patentinhaber : **COATHYLENE S.A.**
**Rue de l'Hôpital 3**
**CH-1700 Fribourg (CH)**

(72) Erfinder : **Weller, Wolfgang**
**Rue des Alouettes**
**CH-1635 La Tour-de-Trême (CH)**

(74) Vertreter : **Werner, Hans-Karsten, Dr. et al**
**Deichmannhaus am Hauptbahnhof**
**D-5000 Köln 1 (DE)**

EP 0 118 667 B1

## Beschreibung

Gegenstand der vorliegenden Erfindung sind Markierungsmittel, insbesondere zur Markierung von feindispersen Systemen, welche eine Identifizierung des verwendeten Stoffes bezüglich Herkunft und Zusammensetzung und ggf. auch Herstellungsdatum mit Hilfe mikroanalytischer Methoden gestatten. Weiterhin betrifft die Erfindung das Verfahren zur Herstellung solcher Markierungsmittel und deren Verwendung insbesondere zur Markierung von feinpulverigen Substanzen.

Die zunehmende Entwendung und unerlaubte Benutzung von Sprengstoffen hat zu dem Bedürfnis geführt, die Herkunft, die Art und ggf. auch den Herstellungszeitpunkt von Sprengstoffen eindeutig nachweisen zu können. Es sind daher bereits eine Reihe von Markierungsmitteln vorgeschlagen worden bzw. auf den Markt gekommen. Markierungsmittel für Sprengstoffe sind beispielsweise in den US-PSen 4 053 433, 3 772 200, 3 897 284, 4 131 064, 4 197 104, 3 961 106, 3 967 990 und 3 993 838 beschrieben. Von der Anmelderin der vorliegenden Anmeldung sind weiterhin verbesserte Markierungsmittel entwickelt worden, welche in hochmolekularen, thermoplastisch verarbeitbaren Polymeren eingebettete ferromagnetische Teile sowie ggf. Fluoreszenzpigmente, lösliche und unlösliche Fluoreszenzstoffe, Farbpigmente, Oxide und/oder Salze von selteneren Metallen sowie Oxide und/oder schwerlösliche Salze seltener Erden in mikroanalytisch gut erfaßbaren Mengen enthalten sind. Sie werden hergestellt durch homogenes Verschmelzen der Komponenten, Granulieren und Vermahlen.

Diese Markierungsmittel sind Gegenstand der EP-A1-0 085 414, veröffentlicht am 10.08.83.

Es wurde jetzt festgestellt, daß nicht nur für Sprengstoffe, sondern auch für eine Reihe weiterer Substanzen ein breitgestreuter Bedarf an Markierungsmitteln besteht. Feindisperse Systeme, insbesondere feinpulverige Substanzen von hoher Wirksamkeit oder hohem Wert und insbesondere hohen Qualitätsanforderungen, sollten so markierbar sein, daß auch später noch feststellbar ist, ob es sich um Originalware handelt. In einigen Fällen ist es sogar erwünscht, wie bei Sprengstoffen nicht nur den Hersteller, sondern auch das Herstellungs- und Abfülldatum nachträglich feststellen zu können. Feinpulverige Substanzen dieser Art sind beispielsweise Herbizide, Pestizide, Düngemittel, aber auch feindisperse Systeme wie hochwertige Speziallacke etc.

Die Markierungsmittel für Sprengstoffe sind für derartige Zwecke ungeeignet, da sie zu grobkörnig sind und auch unter Zuhilfenahme von Spezialtechnologien, wie der Vermahlung unter flüssigem Stickstoff oder durch Löse-Fäll-Prozesse, nicht ausreichend feinverteilt werden können. Die von der Anmelderin als Markierungsmittel für Sprengstoffe vorgeschlagenen Kunstoffe, wie Polyäthylene, Polypropylene, Polyamide, Polycarbonate, Polyester, Polyoximethylene oder Acrylnitril-Butadien-Styrolcopolymere ließen sich auch bei extrem niedrigen Temperaturen, wie unter flüssigem Stickstoff, nicht zu der gewünschten Korngröße von kleiner als 50 μm, vorzugsweise kleiner als 20 μm, vermahlen.

Die Erfindung hat sich somit die Aufgabe gestellt, Markierungsmittel für feindisperse Systeme zur Verfügung zu stellen, die sich einerseits leicht und wirtschaftlich herstellen lassen, zum anderen zu homogenen Partikeln von kleiner als 50 μm, vorzugsweise sogar kleiner als 20 μm, vermahlen lassen. Die Markierungsmittel müssen weiterhin gegen Wasser und Feuchtigkeit beständig sein, sollen sich jedoch von den feinpulverigen Substanzen leicht abtrennen und einwandfrei mikroanalytisch identifizieren lassen.

Es wurde jetzt gefunden, daß sich die ungehärteten Polymerkomponenten von Pulverlacken auf der Basis von Polyacrylaten, Polyestern oder polymeren Epoxiden ausgezeichnet eignen, als thermoplastisch verarbeitbares Material eingesetzt zu werden, um Eisenpulver und/oder Pulver ferromagnetischer Legierungen sowie die weiteren mikroanalytisch gut erfaßbaren Substanzen in der Schmelze einzubetten und sich danach auch noch einwandfrei zu Teilchengrößen von weniger als 50 μm, vorzugsweise sogar weniger als 20 μm, vermahlen zu lassen. Gegenstand der vorliegenden Erfindung sind somit Markierungsmittel, enthaltend

a) mindestens 1 Gew.% Eisenpulver und/oder Pulver ferromagnetischer Legierungen sowie mindestens zwei der folgenden Substanzgruppen

b) Fluoreszenzpigmente,

c) in organischen Lösungsmitteln lösliche, wasserunlösliche Fluoreszenzstoffe,

d) Farbpigmente,

e) schwerlösliche und hitzestabile Oxide und/oder Salze von selteneren Metallen,

f) Oxide und/oder schwerlösliche Salze seltener Erden in mikroanalytisch gut erfaßbaren Mengen homogen vermischt in einem thermoplastischen Material, dadurch gekennzeichnet, daß das thermoplastisch verarbeitbare Material die ungehärtete Polymerkomponente von Pulverlacken auf Basis von Polyacrylaten, Polyestern oder polymeren Epoxiden ist.

Das erfindungsgemäße Verfahren zur Herstellung der Markierungsmittel ist dadurch gekennzeichnet, daß man als thermoplastisch verarbeitbares Material die ungehärtete Polymerkomponente von Pulverlacken auf der Basis von Polyacrylaten, Polyestern oder polymeren Epoxiden verwendet, die Substanz a) und mindestens zwei der Substanzen b) bis f) in die Schmelze einbringt, homogen vermischt, das Gemisch granuliert, fein vermahlt und gewünschtenfalls durch Windsichtung vom Grobkorn abtrennt.

Das Eisenpulver und/oder Pulver ferromagnetischer Legierung muß mindestens in Mengen von 1 % vorliegen, damit das Markierungsmittel mit Hilfe von Magneten aus den feinpulverigen Substanzen herausgeholt werden kann. Im allgemeinen werden Menge von 3-20 Gew.% ferromagnetischen Materials eingesetzt. Besonders bewährt haben sich Mengen von 5-12 Gew.%.

Zur eindeutigen Codierung und Decodierung der erfindungsgemäßen Markierungsmittel müssen mindestens zwei der Substanzgruppen Fluoreszenzpigmente, Fluoreszenzstoffe, Farbpigmente, Oxide und/oder Salze von selteneren Metallen sowie Oxide und/oder schwerlösliche Salze seltener Erden vorliegen. Je mehr verschiedene Substanzgruppen zum Einsatz kommen, umso größer ist die Variierbarkeit und umso leichter ist eine eindeutige Zuordnung nach Hersteller, Herstellungsdatum und Zusammensetzung des markierten Stoffgemisches möglich. Um Substanzgruppen in den erfindungsgemäßen Markierungsmitteln auch mikroanalytisch gut erfassen zu können, sollten diese in den folgenden Mengen vorliegen :

b) Fluoreszenzpigmente in Mengen von 0,1 bis 8 Gew.%, vorzugsweise 2 bis 5 Gew.%,

c) Fluoreszenzstoffe in Mengen von 0,1 bis 5 Gew.%, vorzugsweise 1 bis 3 Gew.%,

d) Farbpigmente in Mengen von 0,5 bis 8 Gew.%, vorzugsweise 1 bis 5 Gew.-%,

e) Oxide und/oder Salze von selteneren Metallen in Mengen von 0,5 bis 8 Gew.-%, vorzugsweise 1 bis 5 Gew.-%,

f) Oxide und/oder Salze seltener Erden in Mengen von 0,5 bis 5 Gew.-%, vorzugsweise 1 bis 3 Gew.-%.

Die Fluoreszenzpigmente sollen unlöslich in Wasser und organischen Lösungsmitteln sein, während die Fluoreszenzstoffe zwar wasserunlöslich, aber in organischen Lösungsmitteln löslich sein sollen. Hierdurch lassen sich diese Substanzgruppen leicht voneinander trennen und unabhängig voneinander analytisch bestimmen. Auch die Farbpigmente, Oxide und/oder Salze von selteneren Metallen und Oxide und/oder schwerlösliche Salze seltener Erden sollen in Wasser und organischen Lösungsmitteln unlöslich sein, so daß sie auf alle Fälle im Rückstand verbleiben und dann nebeneinander eindeutig analytisch bestimmt werden können.

Um die verschiedenen Substanzgruppen homogen im erfindungsgemäßen Markierungsmittel zu verteilen, müssen sie in der Schmelze der Polymeren eingebracht und intensiv vermischt werden. Hierfür haben sich Mischwerkzeuge mit extrem guter Scher- und Knetwirkung bewährt. Einschneckenextruder sind hierfür weniger geeignet. Zweischneckenextruder sind dann gut geeignet, wenn sie hohe Scherkräfte entwickeln. Bewährt hat sich beispielsweise der Zweischneckenkneter vom Typ ZSK der Firma Werner & Pfleiderer, Stuttgart oder der Planetwalzenextruder vom Typ EKK der Firma Battenfeld, Bochum. Auch der chargenweise arbeitende Zwangsmischer vom Typ Banbury erscheint geeignet zu sein. Die homogenen Gemische werden anschließend über Kühlband und Brecher granuliert. Die scherbenartigen Granulate sollten vorzugsweise Durchmesser von weniger als 15 mm aufweisen.

Die Granulate sollten vorzugsweise Kantenlängen von 2 bis 6 mm aufweisen. Derartige Granulate lassen sich ohne Schwierigkeit zu Pulvern mit einer Korngröße von kleiner als 50 µm, vorzugsweise auch kleiner als 20 µm, vermahlen. Nur derartig fein vermahlene Pulver, die ggf. durch Windsichtung von gröberen Körnern befreit wurden, lassen sich beispielsweise mit pulverförmigen Herbiziden und Insektiziden in Form von Aufschlämmungen aus Druckbehältern versprühen, ohne zu Entmischungen zu führen oder gar die Sprühsysteme zu verstopfen. Da Herbizide und Insektizide meist in Partikelgrößen unter 50 µm, teilweise sogar unter 20 µm, liegen, müssen auch die erfindungsgemäßen Markierungsmittel derartig feinteilig sein. Auch zur Markierung von Lacksystemen ist es nötig, extrem fein vermahlene Partikel zu verwenden, zumal Lacksysteme teilweise nur Schichtstärken von 20 µm aufweisen. Selbstverständlich müssen auch die Inhaltsstoffe der Markierungsmittel entsprechend feinteilig sein, so sollte das verwendete Eisenpulver eine Oberkorngrenze von 10 µm aufweisen. Auch die übrigen Komponenten sollten entsprechend fein vermahlen vorliegen und feinverteilt in das Gemisch eingearbeitet werden.

Eingehende Untersuchungen der Anmelderin haben gezeigt, daß alle üblichen thermoplastischen Materialien, die beispielsweise für die Herstellung von Markierungsmitteln von Sprengstoffen geeignet sind, ungeeignet sind für Markierungsmittel von feindispersen Systemen. Die hochmolekularen Kunststoffe, wie Polyäthylene, Polypropylene, Polyamide, Polycarbonate, Polyester, Polyoximethylene und Acrylnitrilbutadien-Styrolcopolymere lassen sich nämlich weder bei Normaltemperatur noch unter flüssigem Stickstoff einwandfrei zu so feinpulverigen Markierungsmitteln vermahlen, wie es an sich notwendig wäre.

Überraschenderweise sind jedoch die ungehärteten Polymerkomponenten von Pulverlacken auf Basis von Polyacrylaten, Polyestern oder polymeren Epoxiden geeignet, einerseits thermoplastisch verarbeitet zu werden und dabei alle übrigen Komponenten des Markierungsmittels in homogener Mischung aufzunehmen, andererseits die extreme Feinvermahlung der wiedererstarrten Gemische zu gestatten. Die ungehärteten Polymerkomponenten von Pulverlacken auf Basis von Polyacrylaten, Polyestern oder polymeren Epoxiden können zwar von den Herstellern einzeln bezogen werden, jedoch werden sie normalerweise nur zusammen mit der zweiten vernetzenden Komponente verwendet. Diese zweite vernetzende Komponente darf erfindungsgemäß nicht anwesend sein, da sie bei stärkerer Erwärmung des Gemisches die thermoplastischen Polymere in Duromere umwandeln würden. Außerdem bestünde die Gefahr, daß diese relativ niedermolekularen vernetzenden Komponenten auch mit den zu markierenden feinpulverigen Substanzen reagieren könnten. Die Verwendung der ungehärteten Polymerkomponenten von Pulverlacken auf Basis von Polyacrylaten, Polyestern oder polymeren Epoxiden zur Herstellung von Markierungsmitteln für feindisperse Systeme stellt somit eine völlig ungewöhnliche

3

und eigentlich zweckentfremdende Verwendung dieser Polymeren dar.

Eine Untersuchung der erfindungsgemäß verwendeten Polymeren und der daraus hergestellten Markierungsmittel mittels Differential-Thermo-Analyse hat ergeben, daß diese Polymeren alle einen ausgeprägten Glasübergangspunkt aufweisen, der im Bereich 50-80 °C liegt. Weiterhin haben diese Thermoplaste Schmelzpunkte im Bereich zwischen 90 und 130 °C. Sie sind daher allein und zusammen mit den übrigen Komponenten gut extrudierbar und nach dem Erstarren bei Raumtemperatur besonders einfach und gut zu extrem feinen Pulvern vermahlbar.

Die speziellen Daten des verwendeten Polymeren unter den Bedingungen der Differential-Thermo-Analyse können als weiteres Kriterium zur Identifizierung und Decodierung der Markierungsmittel herangezogen werden.

Die ferromagnetischen Teile dienen, wie gesagt, zur Auffindung und Abtrennung der erfindungsgemäßen Markierungsmittel von den in erheblichem Überschuß vorhandenen zu markierenden feindispersen Systemen. Als ferromagnetische Materialien haben sich insbesondere Eisenpulver mit einer Oberkorngröße von weniger als 10 μm bewährt. Derartige Eisenpulver werden beispielsweise von der Firma E. MERCK, Darmstadt, in den Handel gebracht. Prinzipiell sind aber auch alle anderen ferromagnetischen Legierungen geeignet, sofern sie in ausreichend feiner Pulverform zur Verfügung stehen. Sofern diese Legierungen relativ seltene Legierungsbestandteile enthalten, können prinzipiell auch diese zur Identifizierung und Decodierung herangezogen werden.

Als Fluoreszenzpigmente kommen prinzipiell alle solche Pigmente in Frage, die sich durch ihr Fluoreszenzspektrum und ihre Eigenfarbe eindeutig voneinander unterscheiden lassen. Beispiele für geeignete Fluoreszenzpigmente sind die von der Firma Industrial Colours Ltd., England, unter der Bezeichnung FLARE 910, orange, green und yellow vertriebenen Pigmente oder die LUMILUX C-Leuchtpigmente der Firma Riedel-de Haën AG. Als Fluoreszenzstoffe kommen prinzipiell alle in organischen Lösungsmitteln löslichen Typen in Frage, die mit Hilfe organischer Lösungsmittel aus den Markierungsmitteln herausgelöst werden können. Die Fluoreszenzstoffe sollten vorzugsweise wasserunlöslich sein, so daß sie nicht bereits durch Wasser aus dem Markierungsmittel herausgelöst werden können.

Beispiele für geeignete Fluoreszenzstoffe sind die unter den Bezeichnungen UVITEX OB, UVITEX 127 und UVITEX OB-P der Firma Ciba-Geigy und unter den Bezeichnungen FLUOLITE XNR und FLUOLITE XMP der Firma ICI vertriebenen Produkte. Als Farbpigmente können wiederum alle ausreichend unlöslichen und wärmestabilen Pigmente verwendet werden, deren Emissionsspektrum eindeutig identifizierbar ist. Geeignete Farbstoffpigmente sind z. B. Sicoplast Gelb 12-0190 und Sicoplast Rot 32-0300 der Firma BASF sowie z. B. die von der Firma ICI unter der Bezeichnung Waxoline vertriebenen Pigmente mit den Farben blau, rubinrot, grün und gelb.

Als schwerlösliche und hitzestabile Oxide und/oder Salze von selteneren Metallen kommen beispielsweise Titandioxid, Kupferoxid, Zinkoxid, Strontiumcarbonat, Cadmiumsulfid, Antimontrioxid, Bariumsulfat, Lanthantrioxid und Wismuttrioxid in Frage. Als Oxide und/oder schwerlösliche Salze der seltenen Erden kommen insbesondere Cer-IV-Oxid sowie die übrigen Oxide bzw. Oxalate der Lanthaniden in Frage. Im übrigen können schwerlösliche und hitzestabile Oxide und/oder Salze von allen Metallen allein oder in Kombination verwendet werden, sofern sie mikroanalytisch eindeutig, z. B. durch Röntgenfluoreszenzspektrometrie, identifiziert werden können.

In den nachfolgenden Beispielen sind einige typische Ausführungsformen der erfindungsgemäßen Markierungsmittel sowie ihre Herstellung beschrieben. Alle Prozentangaben hierin sind Gewichtsprozente.

Beispiel 1

| | |
|---|---|
| 15,2 kg Acrylatharz | (74,9 %) |
| 1,5 kg Eisenpulver | (10,0 %) |
| 1,2 kg Fluoreszenzpigment | (8,0 %) |
| 0,5 kg Lanthan-III-oxyd | (3,5 %) |
| 0,6 kg Antimontrioxid | (3,6 %) |

werden als trockene Pulver in einem Fluidmischer vom Typ Henschel mit einem Volumen von 75 l und einer Drehzahl der Mischwerkzeuge von 1 600 UpM eingegeben und 1 Minute durchgemischt. Dieses Gemisch wird in den Eintragsbehälter eines Zweischneckenkneters vom Typ Werner & Pfleiderer ZSK 57 M 50 eingefüllt und bei einer Schneckendrehzahl von 250 UpM und einem Massetemperaturbereich von 110-130 °C homogenisiert. Das homogenisierte Produkt wird über eine Bandkühlanlage mit Brecher ausgetragen und granuliert. Das schuppenförmige Granulat wird auf einer Mahlanlage vom Typ Micropul ACM 60 bei einer Trägergastemperatur von max. 35 °C quantitativ auf eine Oberkorngröße von 60 μm vermahlen. Das Produkt besitzt eine Korngrößenverteilung von 3-60 μm bei einem Gewichtsmittelwert von 12 μm und einem Anteil von 86 % < 20 μm. Durch anschließende Windsichtung in einem Walther-Industrie-Wirbelsichter vom Typ 250 konnten 70 % eines Produktes mit einer sauberen Oberkorngrenze von 20 μm abgetrennt werden.

**0 118 667**

Acrylatharz

Lumitol LR 8655, ein hydroxylgruppenhaltiges Acrylatharz, mit einer DSC Peaktemperatur von 62-64 °C und einer Hydroxylzahl von 78,2 mg KOH/g. Lumitol ist ein Markenzeichen der Firma BASF, Bundesrepublik Deutchland.

Eisenpulver

Qualität « 3819 » mit einer Oberkorngröße von 10 µm und einer Reinheit von 99,5 %. 3819 ist eine Typenbezeichnung der Firma MERCK, Bundesrepublik Deutschland.

Fluoreszenzpigment

Flare 910 yellow 27, gelbe Eigenfarbe. Flare ist ein Markenzeichen der Firma Industrial Colours Ltd., England.

Cer-IV-oxid

Ein Produkt der Firma MERCK, Bundesrepublik Deutschland, mit einer Reinheit von 99,9 %.

Antimontrioxid

TIMONOX-WHITE STAR mit einer Reinheit von 99 %. TIMONOX WHITE STAR ist ein Markenname der Firma ASSOCIATED LEAD Manufacturers Ltd., England.

### Beispiel 2

Folgende trockenen, pulverförmigen Komponenten werden mit einem Pflugscharmischer vom Typ Lödige FM 130 D mit einem Volumen von 130 l und einer Drehzahl der Mischwerkzeuge von 1 000 UpM gegeben, während 3 Min. durchgemischt und dann in den Eintragsbehälter eines Planetwalzenextruders vom Typ Battenfeld-EKK PDE 100 EV eingefüllt, dann bei einer Schneckendrehzahl von 30 UpM und einer Massetemperatur von 90-120 °C homogenisiert und über ein Kühlband mit Brecher ausgetragen und granuliert.

| | | |
|---|---|---|
| 22,4 kg | Epoxyharz | (74,9 %) |
| 3,0 kg | Eisenpulver | (10,0 %) |
| 2,4 kg | Fluoreszenzpigment | (8,0 %) |
| 1,0 kg | Lanthan-III-oxid | (3,5 %) |
| 1,2 kg | Antimontrioxid | (3,6 %) |

Das so erhaltene schuppenförmige Granulat wird gemäß Beispiel 1 auf eine Endfeinheit (Oberkom) von 50 µm bei einem Gewichtsmittelwert von 8,5 µm und einem Anteil von 88 % unter 15 µm vermahlen. Durch eine Windsichtung mittels eines Donaldson-Windsichters vom Typ Accucut C-24 lassen sich daraus 78 % eines Pulvers mit sauberer Oberkorngrenze von 15 µm abtrennen.

Epoxyharz

Epikote 1004, ein Epoxyharz mit einer DSC-Peaktemperatur von 62 °C und einem Epoxy-Äquivalentgewicht von 850-940 g. Epikote ist ein Markenzeichen der Firma SHELL Chemie, England.

Eisenpulver, Fluoreszenzpigment, Lanthan-III-oxid, Antimontrioxid :

Produkte wie in Beispiel 1.

### Beispiel 3

Gemäß Verfahren aus Beispiel 2 (Massetemperatur im Extruder beträgt abweichend max. 135 °C) wird aus folgenden trockenen, pulverförmigen Komponenten ein schuppenartiges Granulat hergestellt und auf eine Oberkorngrenze von 80 µm vermahlen. Das Produkt hat einen Gewichtsmittelwert von 18 µm und einen Anteil von 84 % < 30 µm. Gemäß Beispiel 2 können daraus 77 % eines Pulvers mit einer sauberen Oberkorngrenze von 30 µm abgetrennt werden :

| | | |
|---|---|---|
| 15,0 kg | Polyesterharz | (74,9 %) |
| 2,0 kg | Eisenpulver | (10,0 %) |
| 1,6 kg | Fluoreszenzpigment | (8,0 %) |

5

0,7 kg Lanthan-III-oxid               (3,5 %)
0,7 kg Antimontrioxid                (3,6 %)

Polyesterharz

Crylcoat 280, ein hydroxylgruppenhaltiges Polyesterharz mit einer Flow Rate/ASTM D 1238, Methode A von 10 g/10 Min. und einer Hydroxylzahl von 50 mg KOH/g. Crylcoat ist ein Markenname der Firma UCB, Specialties Chemical Division, Belgien.

Eisenpulver, Fluoreszenzpigment, Lanthan-III-oxid, Antimontrioxid :

Produkte wie in Beispiel 1.
Die Ausbeute in den Beispielen 1, 2 und 3 konnte dadurch erhöht werden, daß das beim Windsichten angefallene Grobkorn der nächsten Charge Granulat zugemischt wurde, so daß es erneut der Vermahlung unterworfen wurde.

**Patentansprüche**

1. Markierungsmittel, enthaltend
a) mindestens 1 Gew.-% Eisenpulver und/oder Pulver ferromagnetischer Legierungen sowie mindestens zwei der folgenden Substanzgruppen :
b) Fluoreszenzpigmente,
c) in organischen Lösungsmitteln lösliche, wasserunlösliche Fluoreszenzstoffe,
d) Farbpigmente,
e) schwer lösliche und hitzestabile Oxide und/oder Salze von selteneren Metallen,
f) Oxide und/oder schwerlösliche Salze seltener Erden
in mikroanalytisch gut erfaßbaren Mengen homogen vermischt in einem thermoplastischen Material, dadurch gekennzeichnet, daß das thermoplastisch verarbeitbare Material die ungehärtete Polymerkomponente von Pulverlacken auf der Basis von Polyacrylaten, Polyestern oder polymeren Epoxiden ist.

2. Markierungsmittel gemäß Anspruch 1, dadurch gekennzeichnet, daß die Schmelze des Gemisches nach dem Abkühlen granuliert und fein vermahlen wurde.

3. Markierungsmittel gemäß Anspruch 1 oder 2, dadurch gekennzeichnet, daß die Teilchengröße nach dem Vermahlen kleiner als 50 µm, vorzugsweise kleiner als 20 µm, ist.

4. Markierungsmittel gemäß Ansprüchen 1 bis 3, dadurch gekennzeichnet, daß
a) das Eisenpulver und/oder Pulver der ferromagnetischen Legierung in Mengen von 3 bis 20 Gew.% vorliegt und von den nachfolgenden Substanzen mindestens zwei in den folgenden Mengen vorliegen :
b) Fluoreszenzpigmente in Mengen von 0,1 bis 8 Gew.%,
c) Fluoreszenzstoffe in Mengen von 0,1 bis 5 Gew.%,
d) Farbpigmente in Mengen von 0,5 bis 8 Gew.%,
e) Oxide und/oder Salze von selteneren Metallen in Mengen von 0,5 bis 8 Gew.% und
f) Oxide und/oder Salze seltener Erden in Mengen von 0,5 bis 5 Gew.%.

5. Verfahren zur Herstellung von Markierungsmitteln, enthaltend
a) mindestens 1 Gew.% Eisenpulver und/oder Pulver ferromagnetischer Legierungen sowie mindestens zwei der folgenden Substanzgruppen
b) Fluoreszenzpigmente,
c) in organischen Lösungsmitteln lösliche, wasserunlösliche Fluoreszenzstoffe,
d) Farbpigmente,
e) schwer lösliche und hitzestabile Oxide und/oder Salze von selteneren Metallen,
f) Oxide und/oder schwerlösliche Salze seltener Erden in mikroanalytisch gut erfaßbaren Mengen homogen vermischt in einem thermoplastischen Material, dadurch gekennzeichnet, daß man als thermoplastisch verarbeitbares Material die ungehärtete Polymerkomponente von Pulverlacken auf der Basis von Polyacrylaten, Polyestern oder polymeren Epoxiden verwendet, die Substanz a) und mindestens zwei der Substanzen b) bis f) in die Schmelze einbringt, homogen vermischt, das Gemisch granuliert, fein vermahlt und gewünschtenfalls durch Windsichtung vom Grobkorn abtrennt.

6. Verfahren gemäß Anspruch 5, dadurch gekennzeichnet, daß das Eisenpulver oder Pulver der ferromagnetischen Legierung in Mengen von 3 bis 20 Gew.% vorliegt und von den nachfolgenden Substanzgruppen mindestens zwei in den folgenden Mengen vorliegen :
b) Fluoreszenzpigmente in Mengen von 0,1 bis 8 Gew.%,
c) Fluoreszenzstoffe in Mengen von 0,1 bis 5 Gew.%,
d) Farbpigmente in Mengen von 0,5 bis 8 Gew.%,
e) Oxide und/oder Salze von selteneren Metallen in Mengen von 0,5 bis 8 Gew.%

und

f) Oxide und/oder Salze seltener Erden in Mengen von 0,5 bis 5 Gew.%.

7. Verfahren gemäß einem der Ansprüche 5 oder 6, dadurch gekennzeichnet, daß die Teilchengröße nach dem Vermahlen kleiner als 50 μm, vorzugsweise kleiner als 20 μm, ist.

8. Verwendung der Markierungsmittel gemäß einem der Ansprüche 1 bis 4 zur Markierung von feindispersen Systemen.

## Claims

1. A tracer (marking agent) containing

a) at least 1 per cent by weight of iron powder and/or powder of a ferromagnetic alloy and at least two of the following groups of substances :

b) fluorescent pigments ;

c) organic solvent-soluble, water-insoluble fluorescent materials ;

d) colorant pigments ;

e) sparingly soluble and heat-stable oxides and/or salts of rarer metals ;

f) oxides and/or sparingly soluble salts of rare-earth metals ;

in microanalytically well detectable amounts in the form of a homogeneous mixture with a thermoplastic material, characterized in that the thermoplastically processable material is the uncured polymer component of powder varnishes based on polyacrylates, polyesters, or polymeric epoxides.

2. The tracer according to claim 1, characterized in that the melt has been granulated and ground upon cooling.

3. The tracer according to claims 1 or 2, characterized in that the particle size after grinding is less than 50 μm, and preferably less than 20 μm.

4. The tracer according to any one of claims 1 to 3, characterized in that

a) the iron powder and/or powder of ferromagnetic alloys is present in an amount of from 3 to 20 % by weight, and at least two of the following substances are present in an amount set forth below :

b) fluorescent pigments in amounts of from 0.1 to 8 % by weight ;

c) fluorescent materials in amounts of from 0.1 to 5 % by weight ;

d) colorant pigments in amounts of from 0.5 to 8 % by weight ;

e) oxides and/or salts of rarer metals in amounts of from 0.5 to 8 % by weight ; and

f) oxides and/or salts of rare-earth elements in amounts of from 0.5 to 5 % by weight.

5. A process for producing a tracer containing

a) at least 1 per cent by weight of iron powder and/or powder of a ferromagnetic alloy and at least two of the following groups of substances :

b) fluorescent pigments ;

c) organic solvent-soluble, water-insoluble fluorescent materials ;

d) colorant pigments ;

e) sparingly soluble and heat-stable oxides and/or salts of rarer metals ;

f) oxides and/or sparingly soluble salts of rare-earth metals ;

in microanalytically well detectable amounts in the form of a homogeneous mixture with a thermoplastic material, characterized in that there is employed, as the thermoplastically processable material the uncured polymer component of powder varnishes based on polyacrylates, polyesters, or polymeric epoxides, the substance a) and at least two of the substances b) to f) are introduced into the melt thereof, followed by thorough mixing to form a homogeneous mixture, granulating and finely grinding said mixture and, if desired separating the fines from coarse grain by air separation.

6. The process according to claim 5, characterized in that the iron powder and/or powder of ferromagnetic alloys is present in an amount of from 3 to 20 % by weight, and at least two of the following substances are present in an amount set forth below :

b) fluorescent pigments in amounts of from 0.1 to 8 % by weight ;

c) fluorescent materials in amounts of from 0.1 to 5 % by weight ;

d) colorant pigments in amounts of from 0.5 to 8 % by weight ;

e) oxides and/or salts of rarer metals in amounts of from 0.5 to 8 % by weight ; and

f) oxides and/or salts of rare-earth elements in amounts of from 0.5 to 5 % by weight.

7. The process according to claim 5 or 6, characterized in that the particle size after grinding is less than 50 μm, and preferably less than 20 μm.

8. Use of a tracer according to any one of claims 1 through 4 for labelling finely dispersed systems.

## Revendications

1. Compositions de marquage contenant

a) au moins 1 % en masse de poudre de fer et/ou de poudre d'alliages ferromagnétiques et au moins deux des groupes de substances suivants :

7

b) pigments fluorescents,

c) substances fluorescentes solubles dans les solvants organiques et insolubles dans l'eau,

d) pigments colorants,

e) oxydes et/ou sels difficilement solubles et stables à la chaleur de métaux relativement peu répandus,

f) oxydes, et/ou sels difficilement solubles, de terres rares,

mélangés de façon homogène, en quantités bien détectables par micro-analyse, à une matière thermoplastique, caractérisées par le fait que la matière thermoplastique est le constituant polymère non durci de vernis en poudre à base de polyacrylates, polyesters ou époxydes polymères.

2. Compositions de marquage selon la revendication 1, caractérisées par le fait que le mélange fondu a été, après refroidissement, granulé et broyé fin.

3. Compositions de marquage selon l'une des revendications 1 et 2, caractérisées par le fait que la grosseur des particules après le broyage est inférieure à 50 μm, de préférence inférieure à 20 μm.

4. Compositions de marquage selon les revendications 1 à 3, caractérisées par le fait que

a) la poudre de fer et/ou la poudre d'alliage ferromagnétique est présente dans une proportion de 3 à 20 % en masse et au moins deux des groupes de substances suivants sont présents dans les proportions suivantes :

b) pigments fluorescents : 0,1 à 8 % en masse,

c) substances fluorescentes : 0,1 à 5 % en masse,

d) pigments colorants : 0,5 à 8 % en masse,

e) oxydes et/ou sels de métaux relativement peu répandus : 0,5 à 8 % en masse,

f) oxydes et/ou sels de terres rares : 0,5 à 5 % en masse.

5. Procédé de fabrication de compositions de marquage contenant

a) au moins 1 % en masse de poudre de fer et/ou de poudre d'alliages ferromagnétiques et au moins deux des groupes de substances suivants :

b) pigments fluorescents,

c) substances fluorescentes solubles dans les solvants organiques et insolubles dans l'eau,

d) pigments colorants,

e) oxydes et/ou sels difficilement solubles et stables à la chaleur de métaux relativement peu répandus,

f) oxydes, et/ou sels difficilement solubles, de terres rares,

mélangés de façon homogène, en quantités bien détectables par micro-analyse, à une matière thermoplastique, caractérisé par le fait qu'on utilise comme matière thermoplastique le constituant polymère non durci de vernis en poudre à base de polyacrylates, polyesters ou époxydes polymères, incorpore à cette matière fondue la substance a) et au moins deux des substances b) à f), mélange pour homogénéiser, granule le mélange, le broie fin et au besoin sépare le gros grain par voie pneumatique.

6. Procédé selon la revendication 5, caractérisé par le fait que la poudre de fer ou la poudre d'alliage ferromagnétique est présente dans une proportion de 3 à 20 % en masse et au moins deux des groupes de substances suivants sont présents dans les proportions suivantes :

b) pigments fluorescents : 0,1 à 8 % en masse,

c) substances fluorescentes : 0,1 à 5 % en masse,

d) pigments colorants : 0,5 à 8 % en masse,

e) oxydes et/ou sels de métaux relativement peu répandus : 0,5 à 8 % en masse,

f) oxydes et/ou sels de terres rares : 0,5 à 5 % en masse.

7. Procédé selon l'une des revendications 5 et 6, caractérisé par le fait que la grosseur des particules après le broyage est inférieure à 50 μm, de préférence inférieure à 20 μm.

8. Utilisation des compositions de marquage selon l'une des revendications 1 à 4 pour le marquage de systèmes finement dispersés.